# EUROPÄISCHE PATENTSCHRIFT

(11) **EP 2 060 820 B1**
(45) Veröffentlichungstag und Bekanntmachung des Hinweises auf die Patenterteilung: **04.09.2013**
(21) Anmeldenummer: 08019442.6
(22) Anmeldetag: 06.11.2008
(51) Int. Cl.: F16D 48/08

(54) **Verfahren zur Steuerung einer automatisierten Reibungskupplung**
Method for controlling an automatic friction coupling
Procédé de commande d'un embrayage à frictions automatisé

(30) Priorität: 15.11.2007 DE 102007054589
(43) Veröffentlichungstag der Anmeldung: 20.05.2009
(73) Patentinhaber: Schaeffler Technologies AG & Co. KG, 91074 Herzogenaurach (DE)
(72) Erfinder: Becht, Marco, 77815 Bühl (DE)

(56) Entgegenhaltungen:
- EP-A2- 1 632 689
- WO-A1-03/029681
- DE-A1- 10 128 856
- DE-A1-102004 009 832
- DE-A1-102008 011 896
- GB-A- 2 354 294
- US-A- 5 050 451

## Beschreibung

Die Erfindung betrifft ein Verfahren zum Steuern einer automatisierten, im entspannten Zustand offenen Reibungskupplung, die mittels einer elektromechanischen Ausrückeinheit betätigt wird.

Derartige Reibungskupplungen sind beispielsweise als zugedrückte Reibungskupplungen bekannt. In diesen Reibungskupplungen wird eine axial verlagerbare Druckplatte mittels einer auf ein Hebelsystem zur Beaufschlagung der Druckplatte einwirkende Ausrückvorrichtung gegen eine axial fest angeordnete, auf der Kurbelwelle der Brennkraftmaschine angeordneten Anpressplatte verlagert, wobei eine getriebeseitig angeordnete Kupplungsscheibe mit Reibbelägen von an Druckplatte und Anpressplatte vorgesehene Gegenreibflächen axial beaufschlagt wird, wodurch ein Reibschluss zustande kommt und die Reibungskupplung geschlossen wird.

Weiterhin sind beispielsweise aus der gattungsgemäßen DE 10 2004 009 832 A1 elektromechanische Ausrückeinheiten bekannt, bei denen ein elektrischer Antrieb, beispielsweise ein Elektromotor, eine mechanische Ausrückeinheit antreibt, die die Drehbewegung des Elektromotors in eine axiale Bewegung zur Betätigung des Hebelsystems der Reibungskupplung wandelt. Weiterhin ist in der Wirkeinheit Hebelsystem/Ausrücksystem eine Vorrichtung vorgesehen, die bei einer Abschaltung des Elektromotors die Reibungskupplung in die offene Stellung entspannt, beispielsweise indem ein im Hebelsystem und/oder im Ausrücksystem vorhandener Energiespeicher eine Verlagerung der Reibungskupplung in die offene Position bewirkt. So kann bei einer Betätigung der Reibungskupplung in Schließrichtung das Hebelsystem und/oder ein im Ausrücksystem vorgesehener Energiespeicher vorgespannt werden.

Die DE 101 28 856 A1 zeigt ein Kupplungssystem mit wenigstens einer Lamellen-Kupptungsanordnung, bei der zur Erwärmung des Kupptungs-Betriebsmediums nach dem Starten der Antriebseinheit des Kraftfahrzeugs die Kupplung soweit eingerückt wird, dass durch den Schlupf zwischen den Reibflächen der Lamellenkupplungsanordnung eine Erwärmung des Kupplungsbetriebsmediums durchgeführt wird.

Ein sicheres und schnelles Öffnen derartiger Reibungskupplungen durch Abschalten des elektrischen Antriebs ist für eine Trennung des Getriebes vom Antrieb von großer Bedeutung. Insbesondere bei der Verwendung von zwei sich bei der Drehmomentübertragung auf die ihnen zugeordneten Teilantriebssträngen überschneidende Reibungskupplungen in einem Doppelkupplungsgetriebe müssen bei Fehlfunktion des Getriebes oder einer der Reibungskupplungen schnell durch Selbstöffnung, indem beispielsweise der elektrische Antrieb abgeschaltet wird, geöffnet werden können.

Dabei muss die Auslegung der Ausrückeinheiten durch die oder den Energiespeicher für alle Betriebszustände erfolgen, so dass auch beispielsweise infolge kleiner Außentemperaturen vergrößerte Reibungskräfte und eine Erhöhung der Viskosität von Schmiermitteln zu berücksichtigen ist. Weiterhin ist die Öffnungszeit einer derart aufgebauten Reibungskupplung von den herrschenden Reibungskräften und Viskositäten abhängig.

Aufgabe der Erfindung ist daher die Verbesserung eines Betriebs dieser elektromechanischen Ausrückeinheiten.

Die Aufgabe wird mittels eines Verfahrens zur Steuerung einer automatisierten Reibungskupplung mit dem Merkmalen des Anspruchs 1 gelöst.

Dabei kann der elektrische Antrieb mittels eines Elektromotors, elektromagnetisch, mittels Piezzo-Elementen oder in ähnlicher Weise erfolgen. Die Ausrückmechanik kann ein Hebel- oder Rampensystem zur Herstellung von axialen Hüben sein. Das Hebelsystem kann beispielsweise eine Tellerfeder sein. Es können eine einzelne oder zwei zu einer Doppelkupplung zusammengefasste Reibungskupplungen gesteuert werden, wobei bei einer Doppelkupplung eine mit Ausrückfunktionen für beide Reibungskupplungen ausgestattete oder zwei separat für jede Reibungskupplung zuständige Ausrückeinheiten vorgesehen sein können.

Es können abhängig von den Betriebsbedingungen eine oder mehrere, beispielsweise drei bis zehn Zyklen durchgeführt werden, wobei unter einem Zyklus eine Betätigung der Reibungskupplung beziehungsweise das Verfahren einer Ausrückeinheit um einen vorgebbaren Weg in Schließrichtung und das Zurückfahren in die Öffnungsrichtung vorzugsweise um diesen vorgegebenen Weg zu verstehen ist.

Eine Betriebsbedingung, die das Verfahren einleitet, kann die Außentemperatur sein. So kann beispielsweise bei Unterschreiten einer Außentemperatur eine entsprechende Anzahl von Zyklen eingeleitet werden. Das Verfahren kann beispielsweise ab einer vorgegebenen Temperatur gestartet werden, wobei die Anzahl der durchgeführten Zyklen in Abhängigkeit der Außentemperatur mit abnehmender Außentemperatur gesteigert werden kann. Die Außentemperatur kann mittels Temperaturmodellen in der Software ermittelt werden, beispielsweise in einer im Getriebesteuergerät oder einem anderen Steuergerät hinterlegten und dort aufgerufenen Routine. Zusätzlich oder alternativ können einer oder mehrere Temperaturfühler oder Temperaturmodelle für eine oder mehrere Arbeitsflüssigkeiten des Kraftfahrzeugs als Betriebsbedingung ausgewertet werden. Arbeitsflüssigkeiten können Kühlflüssigkeiten, Motoröle und/oder Getriebeöle und dergleichen sein.

Eine erfindungsgemäße Betriebsbedingung ist der Energieverbrauch des elektrischen Antriebs der elektromechanischen Ausrückeinheit. So kann beispielsweise während der Inbetriebnahme des Kraftfahrzeuges einmalig ein Zyklus gefahren werden, währenddessen die Energie des Antriebs beispielsweise durch eine Strommessung, der Messung eines Spannungsabfalls, einer Bestimmung der Leistung des Antriebs und/oder dergleichen bestimmt wird und abhängig davon das Verfahren gestartet beziehungsweise bei einem Start die Anzahl der Zyklen bestimmt wird. Auf diese Weise lassen sich auch erhöhte Ausrückkräfte ermitteln, die bei gemäßigten Außentemperaturen auftreten, so dass ein Start des Verfahrens und eine Durchführung des Verfahrens diese Effekte beheben oder verbessern kann oder zumindest ein derartiger Versuch unternommen werden kann, wobei beim Ausbleiben einer Verbesserung eine Warnung erfolgen und/oder ein Eintrag in einen Fehlerspeicher erfolgen kann.

Weiterhin kann der Start des Verfahrens von einem Betriebszustand des Getriebes abhängig gemacht werden. So kann beispielsweise der Start des Verfahrens davon abhängig gemacht werden, ob ein Gang manuell eingelegt wurde und/oder ein eingelegter Gang kann bei einem automatisierten Getriebe vor dem Start des Verfahrens ausgelegt werden. Desweiteren kann das Verfahren auch bei eingelegtem Gang gestartet werden, wobei zuvor der Betriebszustand der Brennkraftmaschine geprüft wird. Ist die Brennkraftmaschine stillgelegt, kann bei eingelegtem Gang das Verfahren gestartet werden. Ist die Brennkraftmaschine in Betrieb kann bei eingelegtem Gang dennoch das Verfahren gestartet werden, wenn der Hub der Bewegung der Ausrückeinheit so begrenzt wird, dass die Reibungskupplung zwischen einem vollständig ausgerückten Zustand und bis zu einem Greifpunkt, bei der eine Momentenübertragung über die Reibungskupplung beginnt, betätigt wird. Es versteht sich, dass eine derartige Betätigung der Reibungskupplung auch bei stillgesetzter Brennkraftmaschine vorteilhaft sein kann.

Durch die Betätigung der Ausrückeinheit während des vorgeschlagenen Verfahrens werden beispielsweise durch die Bewegung des mechanischen Ausrücksystems in den vorgegebenen Zyklen Reibungswärme erzeugt, Losbrechkräfte werden vermindert und/oder andere Effekte zur Erzielung kleinerer Ausrückkräfte können erfolgen. Es kann daher vorteilhaft sein, wenn die durchgeführten Zyklen mit einer maximalen Betätigungsgeschwindigkeit der elektromechanischen Ausrückeinheit durchgeführt werden. Dabei kann es vorteilhaft sein, die Ausrückeinheit so zu steuern, dass die Reibungskupplung mit maximalem Hub betätigt wird. Nach Durchführung einer entsprechenden Anzahl von Zyklen mit entsprechend vorgegebenem Hub ist die Öffnungszeit der Reibungskupplung bei Abschalten des Antriebs der Ausrückeinheit erheblich verkürzt, so dass insbesondere bei Notöffnungen einer Doppelkupplung bei drohendem Verklemmen des Getriebes infolge einer Drehmomentübertragung beider Reibungskupplungen in unerwünschtem Maße wesentlich früher auch bei niedrigen Außentemperaturen oder sonstigen Störungen begegnet werden kann.

Der Zeitpunkt des Starts des Verfahrens kann möglichst frühzeitig dann erfolgen, wenn die Inbetriebnahme des Fahrzeugs erkennbar oder anzunehmen ist. Beispielsweise kann das Verfahren gestartet werden, wenn ein Türkontaktschalter, ein Zündsignal und/oder ein vergleichbares Signal von einer Steuereinheit erkannt wird. Auf diese Weise können die einzuleitenden Zyklen weitgehend ohne Störung eines schnellen Anfahrprozesses erfolgen. Soll hingegen die Kapazität der Energiespeichereinheit wie Fahrzeugbatterie bei niedrigen Außentemperaturen geschont werden, kann das Verfahren erst bei in Betrieb gesetzter Brennkraftmaschine durchgeführt werden. Eine Entscheidung, wann der Start des Verfahrens erfolgen soll, kann beispielsweise von der Außentemperatur, der Batteriekapazität oder anderen Parametem abhängig gemacht werden. Wird das Verfahren bei in Betrieb gesetzter Brennkraftmaschine gestartet kann der Start beziehungsweise die Art der Durchführung, beispielsweise die Anzahl der durchgeführten Zyklen, von Größen, die auf das Verhalten des Fahrers beziehungsweise dessen Wunsch schnell loszufahren schließen lassen, abhängig gemacht werden. Derartige Größen können beispielsweise die Zeit zwischen dem Öffnen der Tür und dem Start der Brennkraftmaschine, einer Betätigungsgeschwindigkeit des Wählhebels für das Getriebe und/oder dergleichen sein. Es versteht sich, dass abhängig von der Größe der Betriebsbedingungen ein schnelles Anfahren unterbunden und die Anfahrt unter dem Aspekt der Sicherheitsvorkehrungen unterbunden und das Verfahren vorrangig gestartet und durchgeführt werden kann.

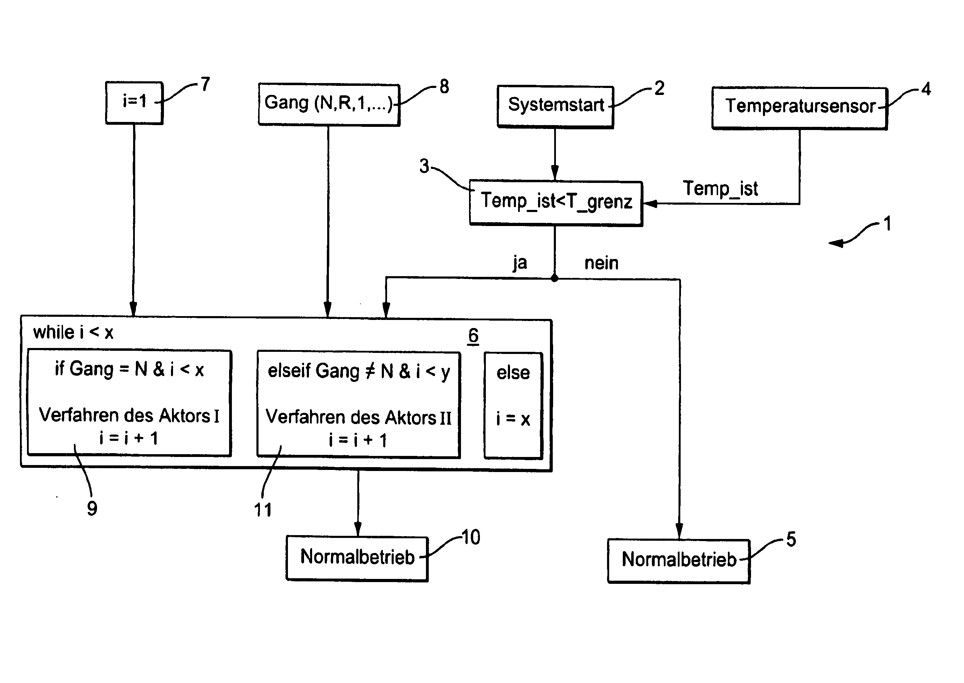

Die Erfindung wird anhand der einzigen Figur, die eine Funktionsdarstellung eines Ausführungsbeispiels einer Routine zur Durchführung des vorgeschlagenen Verfahrens zeigt, näher erläutert.

Die Routine 1 wird in Block 2 gestartet. In der Verzweigung 3 wird eine aktuelle Temperatur Temp_ist auf ein Unterschreiten eines Temperaturgrenzwerts Temp_grenz geprüft. Die aktuelle Temperatur Temp_ist wird dabei von einem in Block 4 dargestellten Temperatursensor, der beispielsweise die Außentemperatur, die Kühlflüssigkeitstemperatur, die Getriebeöltemperatur oder dergleichen erfassen kann, eingelesen. Wird der Temperaturgrenzwert Temp_grenz nicht unterschritten wird die Ausrückeinheit in Block 5 im Normalbetrieb betrieben. Wird der Temperaturgrenzwert Temp_grenz erreicht oder unterschritten wird in der Schleife 6 die Anzahl i der Betätigungsvorgänge mit den Grenzwerten einer maximalen Anzahl von Betätigungsvorgängen x beziehungsweise y der Ausrückeinheit gesteuert. Als Eingangsgrößen dienen dabei die aktuelle Anzahl i in Block 7 sowie die Ganginformation in Block 8, aus der in Schleife 6 der aktuell eingelegte Gang (N, R, 1...) eingelesen wird. In Bedingung 9 wird bei eingelegter Neutralstellung N und einer aktuellen Anzahl i, die die maximale Anzahl x der Zyklen noch nicht erreicht hat, wird die Ausrückeinheit mit dem Befehl "Verfahren des Aktors I^{a} in Schließrichtung der Reibungskupplung und zurück vorzugsweise mit vollem Hub der Reibungskupplung betätigt. Danach wird die Anzahl i hochgezählt. Block 9 wird wiederholt, solange die Anzahl i den Grenzwert nicht erreicht hat. Ist der Grenzwert erreicht, wird die Schleife 9 beendet und in Block 10 der Normalbetrieb der Ausrückeinheit eingeleitet. Ist nicht der Neutralgang N eingelegt, werden in Bedingung 11 entsprechende Zyklen bis zum Erreichen des Grenzwerts y durchfahren, bei der die Ausrückeinheit mit dem Befehl "Verfahren des Aktors II^{a} in einem Wegbereich verfahren wird, in dem kein Moment über die Reibungskupplung übertragen wird, beispielsweise indem die Ausrückeinheit die Reibungskupplung nur von einem voll ausgerückten Zustand bis zu einem Greifpunkt der Reibungskupplung betätigt. Zur Erzielung eines ähnlichen Effekts kann daher der Grenzwert y wesentlich höher sein, so dass mehrere kurzhubige Zyklen in Bedingung 11 als langhubige Zyklen in Bedingung 10 durchfahren werden. Erreicht die Anzahl i den Grenzwert y, wird in Bedingung 12 zu x gesetzt und damit die Routine 1 im Block 10 im Normalbetrieb beendet.

## Patentansprüche

1. Verfahren zur Steuerung einer automatisierten, im entspannten Zustand offenen und durch Beaufschlagung eines Hebelsystems mittels einer elektromechanischen Ausrückeinheit schließenden, zwischen einer Brennkraftmaschine und einem Getriebe mit einer Mehrzahl von Gängen wirksamen Reibungskupplung in einem Kraftfahrzeug, wobei die Reibungskupplung bei einem stromlosem Zustand der elektromechanischen Ausrückeinheit entgegen der Wirkung eines Energiespeichers selbstöffnend ist, **dadurch gekennzeichnet, dass** bei Inbetriebnahme des Kraftfahrzeugs die elektromechanische Ausrückeinheit in einer vorgebbaren, von zumindest einer Betriebsbedingung des Kraftfahrzeugs abhängigen Anzahl von Zyklen aus- und eingerückt wird, wobei eine Betriebsbedingung ein Energieverbrauch eines Antriebs der elektromechanischen Ausrückeinheit während dessen Betriebs ist.

2. Verfahren nach Anspruch 1, **dadurch gekennzeichnet, dass** eine Betriebsbedingung eine Außentemperatur ist.

3. Verfahren nach Anspruch 2, **dadurch gekennzeichnet, dass** die Erfassung der Außentemperatur mittels eines Temperaturfühlers für eine Arbeitsflüssigkeit des Kraftfahrzeugs erfolgt.

4. Verfahren nach einem der Ansprüche 1 bis 3, **dadurch gekennzeichnet, dass** das Verfahren bei nicht eingelegtem Gang erfolgt.

5. Verfahren nach einem der Ansprüche 1 bis 4, **dadurch gekennzeichnet, dass** das Verfahren mit einer maximalen Betätigungsgeschwindigkeit der elektromechanischen Ausrückeinheit durchgeführt wird.

6. Verfahren nach einem der Ansprüche 1 bis 5, **dadurch gekennzeichnet, dass** das Verfahren bei einem maximalen Hub der Reibungskupplung ausgeführt wird.

7. Verfahren nach einem der Ansprüche 1 bis 5, **dadurch gekennzeichnet, dass** das Verfahren zwischen einem vollständig ausgerückten Zustand der Reibungskupplung und einem Betätigungsweg bis zum Erreichen eines Greifpunkts der Reibungskupplung durchgeführt wird.

8. Verfahren nach einem der Ansprüche 1 bis 7, **dadurch gekennzeichnet, dass** das Verfahren bei Erkennen eines Inbetriebnahmesignals gestartet wird.

9. Verfahren nach einem der Ansprüche 1 bis 8, **dadurch gekennzeichnet, dass** das Verfahren bei in Betrieb gesetzter Brennkraftmaschine und ausgelegtem Gang erfolgt.

10. Verfahren nach einem der Ansprüche 1 bis 9, **dadurch gekennzeichnet, dass** das Verfahren auf eine Doppelkupplung mit zwei im offenen Zustand entspannte Reibungskupplungen entsprechend angewendet wird, wobei beide Reibungskupplungen gleichzeitig dem Verfahren unterworfen werden.

## Claims

1. Method for controlling an automated friction clutch in a motor vehicle, which friction clutch is open in the relaxed state and closes by action of a lever system by means of an electromechanical disengagement unit and is active between an internal combustion engine and a transmission having a plurality of gears, the friction clutch being self-opening counter to the action of an energy accumulator in a currentless state of the electromechanical disengagement unit, **characterized in that**, when the motor vehicle is started up, the electromechanical disengagement unit is disengaged and engaged in a predeterminable number of cycles which is dependent upon at least one operating condition of the motor vehicle, one operating condition being an energy consumption of a drive of the electromechanical disengagement unit during the operation of the latter.

2. Method according to Claim 1, **characterized in that** one operating condition is an outside temperature.

3. Method according to Claim 2, **characterized in that** the outside temperature is detected by means of a temperature sensor for a working fluid of the motor vehicle.

4. Method according to one of Claims 1 to 3, **characterized in that** the method is carried out when a gear is not selected.

5. Method according to one of Claims 1 to 4, **characterized in that** the method is carried out at a maximum speed of actuation of the electromechanical disengagement unit.

6. Method according to one of Claims 1 to 5, **characterized in that** the method is carried out at a maximum stroke of the friction clutch.

7. Method according to one of Claims 1 to 5, **characterized in that** the method is carried out between a fully disengaged state of the friction clutch and an actuating travel until a gripping point of the friction clutch is reached.

8. Method according to one of Claims 1 to 7, **characterized in that** the method is commenced when a start-up signal is detected.

9. Method according to one of Claims 1 to 8, **characterized in that** the method is carried out when the internal combustion engine is started up and a gear is selected.

10. Method according to one of Claims 1 to 9, **characterized in that** the method is applied correspondingly to a dual clutch with two friction clutches relaxed in the open state, both friction clutches being subjected simultaneously to the method.

## Revendications

1. Procédé de commande d'un embrayage à friction automatisé, ouvert dans l'état détendu et se fermant par sollicitation d'un système de levier au moyen d'une unité de débrayage électromécanique, agissant entre un moteur à combustion interne et une transmission avec une pluralité de rapports, dans un véhicule automobile, l'embrayage à friction, dans l'état non alimenté en courant de l'unité de débrayage électromécanique, s'ouvrant automatiquement à l'encontre de l'action d'un accumulateur d'énergie, **caractérisé en ce que** lors du démarrage du véhicule automobile, l'unité de débrayage électromécanique est débrayée et embrayée dans un certain nombre de cycles prédéfinissables, dépendant au moins d'une condition de fonctionnement du véhicule automobile, une condition de fonctionnement étant une consommation d'énergie d'un entraînement de l'unité de débrayage électromécanique pendant son fonctionnement.

2. Procédé selon la revendication 1, **caractérisé en ce qu'**une condition de fonctionnement est une température extérieure.

3. Procédé selon la revendication 2, **caractérisé en ce que** la température extérieure est détectée au moyen d'un capteur de température pour un fluide de travail du véhicule automobile.

4. Procédé selon l'une quelconque des revendications 1 à 3, **caractérisé en ce que** le procédé est mis en oeuvre sans que le rapport ne soit enclenché.

5. Procédé selon l'une quelconque des revendications 1 à 4, **caractérisé en ce que** le procédé est mis en oeuvre avec une vitesse d'actionnement maximale de l'unité de débrayage électromécanique.

6. Procédé selon l'une quelconque des revendications 1 à 5, **caractérisé en ce que** le procédé est réalisé pour une course maximale de l'embrayage à friction.

7. Procédé selon l'une quelconque des revendications 1 à 5, **caractérisé en ce que** le procédé est réalisé entre un état complètement débrayé de l'embrayage à friction et une voie d'actionnement jusqu'à ce qu'un point d'engagement de l'embrayage à friction soit atteint.

8. Procédé selon l'une quelconque des revendications 1 à 7, **caractérisé en ce que** le procédé commence à la détection d'un signal de démarrage.

9. Procédé selon l'une quelconque des revendications 1 à 8, **caractérisé en ce que** le procédé est réalisé lorsque le moteur à combustion interne est démarré et qu'un rapport est désenclenché.

10. Procédé selon l'une quelconque des revendications 1 à 9, **caractérisé en ce que** le procédé est appliqué de manière correspondante à un double embrayage avec deux embrayages à friction détendus dans l'état ouvert, les deux embrayages à friction étant soumis simultanément au procédé.
